# EUROPEAN PATENT APPLICATION

(11) **EP 3 560 759 A1**
(43) Date of publication of application: **30.10.2019**
(21) Application number: 18465519.9
(22) Date of filing: 24.04.2018
(51) Int. Cl.: B60R 1/06, B60R 1/076, B60R 11/04

(54) **FOLDABLE DIGITAL MIRROR CAMERA ARM FOR A VEHICLE**

(71) Applicant: Continental Automotive GmbH, 30165 Hannover (DE)
(72) Inventor: Stoian, Liviu Achim, 300238 Timisoara (RO)

(57) **Abstract**

The invention relates to a foldable digital mirror camera arm 100 for a vehicle 500. The foldable digital mirror camera arm 100 comprises a motor 301, a camera device 201, a link element 102 with multiple pivots, a base element 101 pivotably coupled to the link element 102 at a first pivot 10, a mounting element 103 pivotably coupled to the link element 102 at a second pivot 11 and configured to mount the camera device 201, and a force transmission device 401 which may comprise a cable wire, a belt or a chain. The force transmission device 401 is configured to be pulled by the motor 301 in a first direction to fold the foldable digital mirror camera arm 100 or to be pulled or released by the motor 301 in a second direction, opposite to the first direction, to unfold the foldable digital mirror camera arm 100.

## Description

The present invention relates in general to the field of a digital mirror system for a vehicle, such as a passenger car, a commercial vehicle, an off-highway or marine vehicle. Particularly, the invention relates to a foldable digital mirror camera arm for a vehicle and to a vehicle comprising a foldable digital mirror camera arm.

Modern vehicles, such as cars, busses or trucks, are usually equipped with a driver vision system, e.g. an external digital mirror camera system with a camera arm directly mounted outside a vehicle cabin, in order to assist a driver of the vehicle in observing the environment with an adjustable wide angle or a wide field of view for controlling the vehicle. The external digital mirror camera and the camera arm are susceptible to external mechanical effects such as forces or shocks from all directions, which could damage the digital mirror camera system and the sensors integrated in the camera.

It is an objective of the invention to provide a digital mirror camera arm for a vehicle, which reduces the risk of being damaged by external forces or shocks.

The problem is solved by the subject matter according to the independent claim. The dependent claims, the following description and the drawings show embodiments of the invention.

According to a first aspect, a foldable digital mirror camera arm is provided. The camera arm comprises a motor, a camera device, a link element, a base element pivotably coupled to the link element at a first pivot, a mounting element pivotably coupled to the link element at a second pivot and configured to mount the camera device, and a force transmission device, which, e.g., comprises a cable wire, a belt or a chain.

The force transmission device is configured to be pulled by the motor in a first direction to fold the foldable digital mirror camera arm. By pulling the force transmission device in the first direction, the camera arm may be moved from an initially unfolded position or resting position or extended position to a final folded position or bended position, or from a first position between the unfolded position and the folded position to a second position between the first position and the folded position.

Furthermore, the force transmission device is configured to be pulled by the motor in a second direction, opposite to or at least different from the first direction, or to be released by the motor, to unfold the foldable digital mirror camera arm. By pulling the force transmission device or releasing it in the second direction, the camera arm is moved in an opposite direction to the first direction, which means that the camera arm is moved, for instance, from the folded position to the unfolded position, or from the second position at any position between the folded position and the unfolded position to the first position between the second position and the unfolded position.

The first or/and the second position, possibly located at any position between the folded position and the unfolded position, may be predefined by the driver or by the vehicle controlling system. The position change of the camera arm may be performed in a continuous way, driven by the motor.

According to a first embodiment, the base element of the foldable digital mirror camera arm is designed to be triangular.

According to another embodiment, the link element of the foldable digital mirror camera arm is designed to be rectangular.

According to another embodiment, the mounting element of the foldable digital mirror camera arm is designed to be triangular.

According to another embodiment, alternatively, the link element and the mounting element are designed to be of the same shape.

The shape of the mounting element is not limited to the triangular shape as described above, but may vary when necessary to fit different applications.

According to another embodiment, the foldable digital mirror camera arm further comprises at least two fixing elements, which are arranged to be adapted to or integrated in the mounting element, and at least two annular elements, which are arranged to be adapted to or integrated in the link element.

The force transmission device, which may comprise a cable wire, a belt or a chain, is configured to be fastened to the fixing elements.

The force transmission device comprises for example a cable wire with two ends. Each of the two ends is respectively fastened to one of the fixing elements adapted to or integrated in the mounting element. The force transmission device is configured, for instance, to wind around a rotation axis of a motor. Thus, the force transmission device can be observed as having an extendable side and/or a shortenable side. By pulling the force transmission device in the first or second direction or releasing it by the motor, the length on the extendable side or/and the length on the shortenable side can vary correspondingly.

By pulling the force transmission device in the first direction, for example, the length of the force transmission device increases on the extendable side while the length of the force transmission device is decreasing on the shortenable side. By pulling the force transmission device in the second direction, the length of the force transmission device decreases on the extendable side, e.g. to the original length at the unfolded position, while the length of the force transmission device is increasing on the shortenable side, e. g. to the original length at the unfolded position.

Alternatively, the force transmission device can comprise e.g. a cable wire, which is designed to fasten the motor at one end and one of the two fixing elements adapted to or integrated in the mounting element at the other end, forming a shortenable side. On an extendable side, the force transmission device can comprise, instead of a cable wire, a spring which can be arranged to fasten the moter at one end and the other fixing element adapted to or integrated in the mounting element at the other end, forming an extendable side.

By pulling the force transmission device in the first direction, the length of the force transmission device decreases on the shortenable side while the spring is extending on the extendable side. By releasing the force transmission device in the second direction, opposite to the first direction, the length of the force transmission device on the shortenable side increases, e.g. to the original length at the unfolded position, while the spring is being retracted to the original length at the unfolded position.

Furthermore, the force transmission device is configured to pass through the annular elements, which guide the force transmission device when it is pulled in the first or second direction or released by the motor.

The annular elements designed here do not fix the force transmission device, but only allow the force transmission device to slide through it flexibly within a limited region inside the annular elements, when the force transmission device is pulled in the first or second direction or released by the motor. As such, the force transmission device is protected by the annular elements from being damaged by external forces or shocks.

According to another embodiment, the link element and the mounting element can be designed as one piece. The camera arm can thus be directly mounted to the piece.

According to another embodiment, the foldable digital mirror camera arm further comprises a cover, which is designed to protect the camera arm from external unexpected forces.

According to another embodiment, the link element of the foldable digital mirror camera arm comprises a first pivot, which is designed to allow the link element to pivot around the base element, when the force transmission device is pulled in the first or second direction or released by the motor. Simultaneously, the link element comprises a second pivot, which is designed to allow the mounting element to pivot around the link element and further relatively around the base element, when the force transmission device is pulled in the first or second direction or released by the motor.

The multiple pivots of the link element may provide more flexibility of the foldable digital camera arm, resulting in a wide observation angle or field of view.

According to another embodiment, a maximal pivot angle of the foldable digital mirror camera arm between the folded and unfolded position is 90°.

The foldable digital mirror camera arm with multiple pivots at its link elements further enables a continuous change in the pivot angle within 90° between the folded and unfolded position.

According to another embodiment, the motor of the foldable digital mirror camera arm can be a stepper motor, a DC motor, a hydraulic motor or a pneumatic motor.

According to another embodiment, the foldable digital mirror camera arm further comprises a control unit configured to control the motor.

The function of the control unit can be fulfilled by an independent electronic control unit or by a functionality in an existing control unit.

According to another embodiment, the foldable digital mirror camera arm further comprises a plurality of the link elements, which are arranged in sequence and with multiple pivots and spacers in between. The plurality of the link elements is configured in a form bionically similar to vertebras of a spine.

The plurality of the link elements forms an elongated structure of the foldable digital mirror camera arm, which further extends the length of the foldable digital mirror camera arm. Each of the link elements, e.g. a first link element, comprises multiple or two pivots: a first pivot, designed to allow the first link element to pivot around the base element or a second link element, which is adjacent to the first link element and closer to the base element; and a second pivot, designed to allow the mounting element or a third link element, which is adjacent to the first element and further away from the base element, to pivot around the first link element and further relatively around the second link element and the base element. The force transmission device is configured to be fastened to the fixing elements, adapted to or integrated in the mounting element, and to pass through the annular elements, adapted to or integrated in each of the plurality of the link elements, guiding the force transmission device when it is pulled in the first or second direction or released by the motor.

As such, the extended foldable digital mirror camera arm is configured to have a bionic structure which is similar to a structure of spine, in which each of the link elements can be considered similarly as a vertebra of the spine and each of the pivots as a joint of the spine. The extended structure of the foldable digital mirror camera arm enables a wider field of view and allows also advantageously a smoother transition between the folded and unfolded camera arm.

According to a second aspect, a vehicle is provided, wherein the vehicle comprises the foldable digital mirror camera arm described above and, in more detail, in the following. Regarding further effects, advantages and beneficial embodiments of the vehicle according to the second aspect of the present invention, it is referred to the above explanations regarding the foldable digital mirror camera according to the first aspect of the present invention.

These and other aspects will be apparent from and elucidated with reference to the embodiments as per the drawings described hereinafter.
- Fig. 1: shows schematically a top view of a foldable digital mirror camera arm in accordance with an embodiment,
- Fig. 2a: shows schematically a side view of a foldable digital mirror camera arm at the unfolded position in accordance with an embodiment,
- Fig. 2b: shows schematically a side view of a foldable digital mirror camera arm at a position between the unfolded and folded position in accordance with an embodiment,
- Fig. 2c: shows schematically a side view of a foldable digital mirror camera arm at the folded position in accordance with an embodiment,
- Fig. 3a: shows schematically a 3D-front view of a motor wounded by a force transmission device in accordance with an embodiment,
- Fig. 3b: shows schematically a top view of a motor wounded by a force transmission device in accordance with an embodiment,
- Fig. 4: shows schematically a foldable digital mirror camera arm with a plurality of link elements in accordance with an embodiment,
- Fig. 5: shows schematically a vehicle comprising a foldable digital mirror camera arm in accordance with another embodiment.

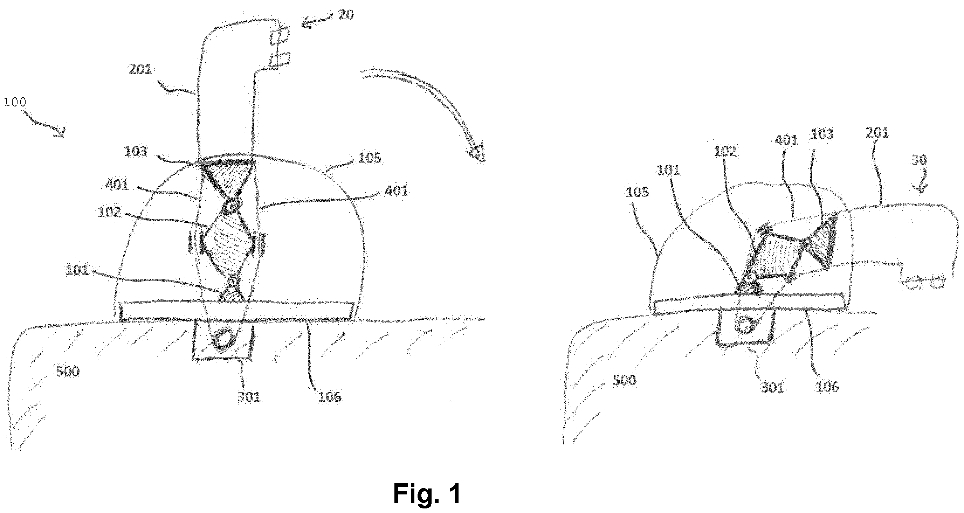

Fig. 1 shows schematically a top view of a foldable digital mirror camera arm 100, which is directly mounted outside a cabin of a vehicle 500. The foldable digital mirror camera arm 100 comprises a camera device 201, a link element 102, arranged between a mounting element 103 and a base element 101. The mounting element 103 is pivotably coupled to the link element 102 and configured to mount the camera device 201, and the base element 101 is pivotably coupled to the link element 102. A motor 301 and a force transmission device 401 are provided, and the force transmission device 401 comprises a cable wire, a belt or a chain. The foldable digital mirror camera arm 100 further comprises a protective cover 105 against external unexpected forces.

The foldable digital mirror camera arm 100 can be moved by the motor 301 to an unfolded position 20 (Fig. 1, left) or to a folded position 30 (Fig. 1, right) or to any position in between. At the unfolded position (Fig. 1, left), also described as resting position or extended position, the camera device 201 is arranged perpendicular to the vehicle cabin surface on which the foldable digital mirror camera arm is mounted; at the folded position (Fig. 1, right), also described as bended position, the camera device 201 is arranged parallel to the vehicle cabin surface on which the foldable digital mirror camera arm is mounted. The force transmission device 401 is configured to be pulled by the motor 301 in a first direction to fold the foldable digital mirror camera arm 100. The camera arm 100 is then moved from the unfolded position 20 to the folded position 30. Alternatively, the force transmission device 401 is configured to be pulled by the motor 301, in a second direction, opposite to the first direction, or to be released by the motor 301, to unfold the foldable digital mirror camera am 100. The camera arm 100 is then moved from the folded position 30 to the unfolded position 20.

A maximal pivot angle between the folded and unfolded digital mirror camera arm is, for example, 90°.

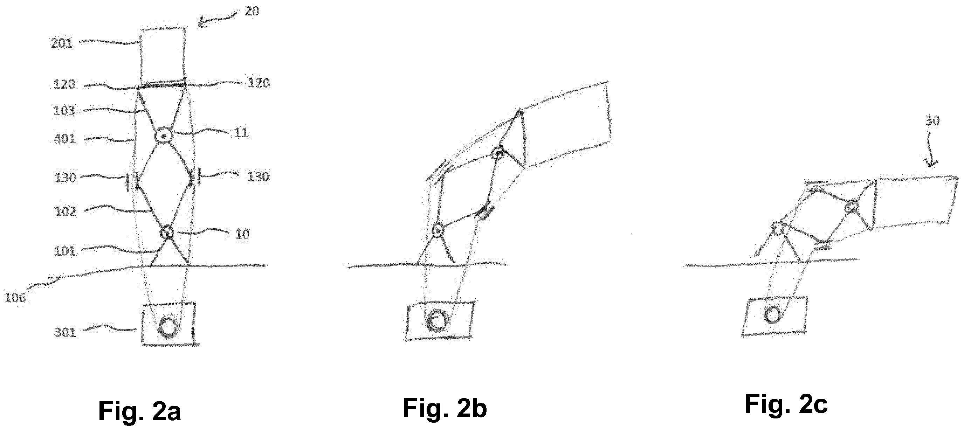

Fig. 2a shows schematically a side view of a foldable digital mirror camera arm at the unfolded position, in which the camera device 201 is arranged perpendicular to the vehicle cabin surface on which the foldable digital mirror camera arm is mounted. The foldable digital mirror camera arm 100 comprises a camera device 201, a link element 102, a mounting element 103, a base element 101, a motor 301 and a force transmission device 401.

The base element 101, designed to be triangular, is configured to be directly mounted to a mounting platform 106 outside the cabin of the vehicle 500 and couple the link element 102 by the first pivot 10.

The link element 102, designed to be rectangular, comprises a first pivot 10, designed to allow the link element 102 to pivot around the base element 101 when the force transmission device is pulled in the first or second direction or released by the motor 301, and a second pivot, designed to allow the mounting element 103 to pivot around the link element 102 and further relatively around the base element 101 when the force transmission device is pulled in the first or second direction or released by the motor 301. Furthermore, the link element 102 comprises two annular elements arranged to be adapted to or integrated in the link element 102.

The mounting element 103, designed to be triangular, is configured to couple the link element 102 by the second pivot 11 and mount the camera device 201. The mounting element 103 further comprises two fixing elements 120 arranged to be adapted to or integrated in the mounting element 103.

The force transmission device 401 is configured to be fastened to the fixing elements 120, to pass further through the annular elements 130 which guide the force transmission device 401, and to couple the motor 301 which pulls the force transmission device 401 in the first or second direction or releases it.

At the unfolded position, the force transmission device 401 has equal lengths between the fixing element and the motor on the extendable side and the shortenable side.

Fig. 2b shows schematically a side view of a foldable digital mirror camera arm 100 at a position between the unfolded and folded position.

By pulling the force transmission device 401 in the first or second direction or releasing it, the foldable digital mirror camera arm 100 may be moved into a flexible position between the unfolded and folded position. The length of the force transmission device 401 on the extendable side is greater than that on the shortenable side.

Fig. 2c shows schematically a side view of a foldable digital mirror camera arm at the folded position.

At the folded position, the length of the force transmission device 401 on the extendable side reaches its maximum and the length of the force transmission device 401 on the shortenable side reaches its minimum. The foldable digital mirror camera arm 100 pivots then to the maximal pivot angle of 90°.

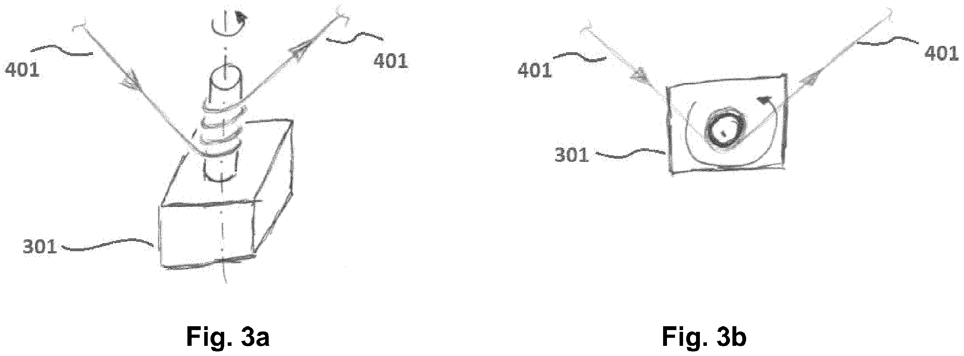

Fig. 3a shows schematically a 3D-front view of a motor 301 wounded by a force transmission device 401.

Alternatively, Fig. 3b shows schematically a top view of a motor 301 wounded by a force transmission device 401.

The force transmission device 401 is coupled to the motor 301 for instance by winding around a rotational axis of the motor 301. The force transmission device 401 can thus be pulled by the motor 301 in a first direction to fold the foldable digital mirror camera arm 100 or be pulled or released by the motor 301 in a second direction to unfold the foldable digital mirror camera arm 100.

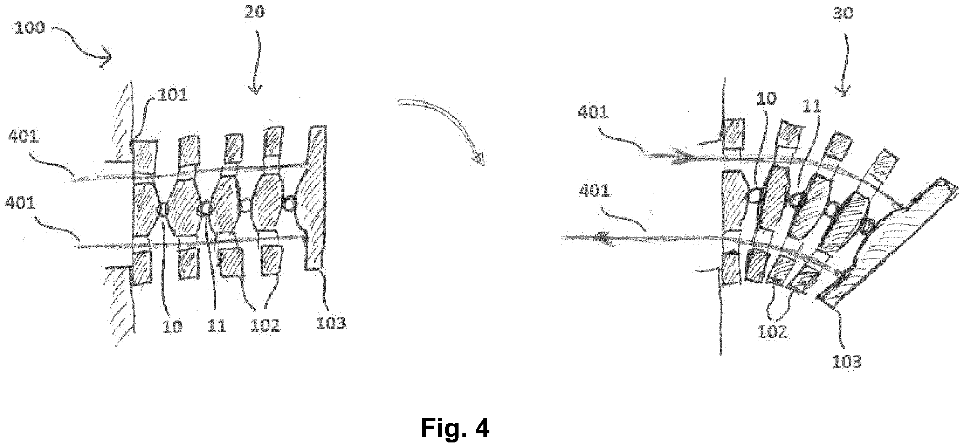

Fig. 4 shows schematically a foldable digital mirror camera arm 100 with a plurality of link elements. The foldable digital mirror camera arm 100 comprises a base element 101, a plurality of the link elements 102, which are arranged in sequence and with multiple pivots and spacers in between and a mounting element 103, which can be designed of the same shape as the link element 102.

The plurality of the link elements 102 forms an elongated structure and extends as such the length of the foldable digital mirror camera arm 100. The extended digital mirror camera arm 100, comprising the plurality of the link elements 102 and pivots 10, 11, is therefore configured in a form bionically similar to that of a spine, which comprises a plurality of vertebras and joints.

Each of the link elements 102, e.g. a first link element, comprises multiple or two pivots: a first pivot 10, designed to allow the first link element to pivot around the base element 101 or a second link element, which is adjacent to the first link element and closer to the base element 101; and a second pivot 11, designed to allow the mounting element 103 or a third link element, which is adjacent to the first element and further away from the base element, to pivot around the first link element or/and further relatively around the second link element or/and the base element 101. The force transmission device 401 is configured to be fastened at its two ends to the fixing elements, adapted to or integrated in the mounting element 103, and to pass through the annular elements, adapted to or integrated in each of the plurality of the link elements 102, guiding the force transmission device 401 when it is pulled in the first or second direction or released by the motor 301.

As such, the extended foldable digital mirror camera arm is configured to have a bionic structure which is similar to a structure of a spine, in which each of the link elements can be considered similarly as a vertebra of the spine and each of the pivots as a joint of the spine.

The extended foldable digital mirror camera arm 100 can be moved by the motor 301 to an unfolded position 20 (Fig. 4, left) or a folded position 30 (Fig. 4, right) or any position in between. The force transmission device 401 is configured to be pulled by the motor 301 in a first direction to fold the foldable digital mirror camera arm 100. The camera arm 100 is then moved from the unfolded position 20 to the folded position 30. Alternatively, the force transmission device 401 is configured to be pulled by the motor 301, in a second direction, opposite to the first direction, or to be released by the motor 301, to unfold the foldable digital mirror camera arm 100. The camera arm 100 is then moved from the folded position 30 to the unfolded position 20.

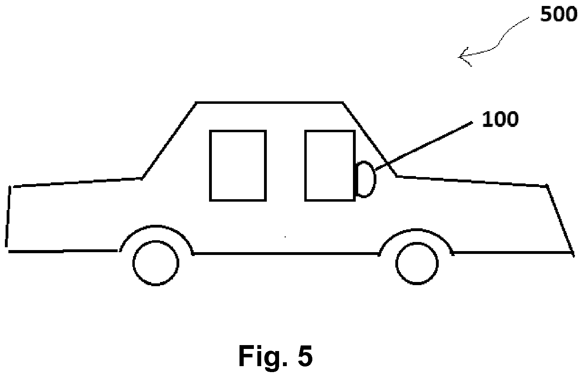

Fig. 5 shows schematically a vehicle 500 comprising a foldable digital mirror camera arm 100, which is designed to be fastened directly outside the vehicle cabin.

## Claims

1. A foldable digital mirror camera arm (100) for a vehicle, comprising:
a motor (301);
a camera device (201);
a link element (102);
a base element (101) pivotably coupled to the link element (102) at a first pivot (10);
a mounting element (103) pivotably coupled to the link element (102) at a second pivot (11) and configured to mount the camera device (201);
a force transmission device (401);
wherein the force transmission device (401) is configured to be pulled by the motor (301) in a first direction to fold the foldable digital mirror camera arm (100);
wherein the force transmission device (401) is configured to be pulled by the motor (301) in a second direction, opposite to the first direction, or to be released by the motor (301), to unfold the foldable digital mirror camera arm (100).

2. The foldable digital mirror camera arm (100) according to claim 1,
wherein the base element (101) is designed to be triangular.

3. The foldable digital mirror camera arm (100) according to claim 1 or 2,
wherein the link element (102) is designed to be rectangular.

4. The foldable digital mirror camera arm (100) according to one of the preceding claims,
wherein the mounting element (103) is designed to be triangular.

5. The foldable digital mirror camera arm (100) according to one of the preceding claims,
wherein the link element (102) and the mounting element (103) are designed to be of the same shape.

6. The foldable digital mirror camera arm (100) according to one of the preceding claims, further comprising:
at least two fixing elements (120) arranged to be adapted to or integrated in the mounting element (103);
at least two annular elements (130) arranged to be adapted to or integrated in the link element (102);
wherein the force transmission device (401) is configured to be fastened to the fixing elements (120);
wherein the force transmission device (401) is configured to pass through the annular elements (130), which guide the force transmission device (401) when it is pulled in the first or second direction or released by the motor (301).

7. The foldable digital mirror camera arm (100) according to one of the preceding claims,
wherein the link element (102) and the mounting element (103) are designed as one piece.

8. The foldable digital mirror camera arm (100) according to one of the preceding claims, further comprising:
a cover (105), the cover protecting the foldable digital mirror camera arm (100) from external unexpected forces.

9. The foldable digital mirror camera arm (100) according to one of the preceding claims,
wherein the link element (102) comprises a first pivot (10), which is designed to allow the link element (102) to pivot around the base element (101), when the force transmission device (401) is pulled in the first or second direction or released by the motor (301) ;
wherein the link element (102) comprises a second pivot (11), which is designed to allow the mounting element (103) to pivot around the link element (102) and further relatively around the base element (101), when the force transmission device (401) is pulled in the first or second direction or released by the motor (301) .

10. The foldable digital mirror camera arm (100) according to one of the preceding claims,
wherein a maximal pivot angle between the folded and unfolded digital mirror camera arm is 90°.

11. The foldable digital mirror camera arm (100) according to one of the preceding claims,
wherein the motor (301) is a stepper motor, a DC motor, a hydraulic motor or a pneumatic motor.

12. The foldable digital mirror camera arm (100) according to one of the preceding claims, further comprising:
a control unit configured to control the motor (301).

13. The foldable digital mirror camera arm (100) according to one of the preceding claims, further comprising:
a plurality of the link elements (102) arranged in sequence and with multiple pivots (10, 11) and spacers (211) in between;
wherein the plurality of the link elements (102) is configured in a form bionically similar to vertebras of a spine.

14. The foldable digital mirror camera arm (100) according to one of the preceding claims,
wherein the force transmission device comprises a cable wire, a belt or a chain.

15. A vehicle (500) comprising a foldable digital mirror camera arm (100) according to one of claims 1 to 14.
